# EUROPEAN PATENT APPLICATION

(11) **EP 1 122 559 A2**
(43) Date of publication of application: **08.08.2001**
(21) Application number: 01100340.7
(22) Date of filing: 04.01.2001
(51) Int. Cl.: G02B 5/00, G02B 19/00, G02B 5/04, G02F 1/1335

(54) **Light-collective film**

(30) Priority: 26.01.2000 JP 2000016505
(71) Applicant: Nakane Co., Ltd., Tokyo 120 (JP)
(72) Inventor: Nakane, Taira, Tokyo 120 (JP); Nakamura, Kenichiro, Tokyo (JP)
(74) Representative: Betten & Resch

(57) **Abstract**

There is provided a light-collective film in which the light incident from various directions is condensed in a regular direction and simultaneously, with a single light-collective film. The light-collective film is comprised of a film base portion 8a and a prism portion 8b. The prism portion is formed of a regular triangular pyramid which is arranged in series on the film base portion and has a vertical angle of 102° ~ 116°.

## Description

### BACKGROUND OF THE INVENTION

### 1. Field of the Invention

The present invention relates to a light-collective film which can condense emergent light when light incident from various directions onto one side thereof emerges from the other side thereof.

### 2. Description of the Related Art

Generally, a light-collective film of a resin is used as a light-collective plate of a backlight of a liquid crystal display.

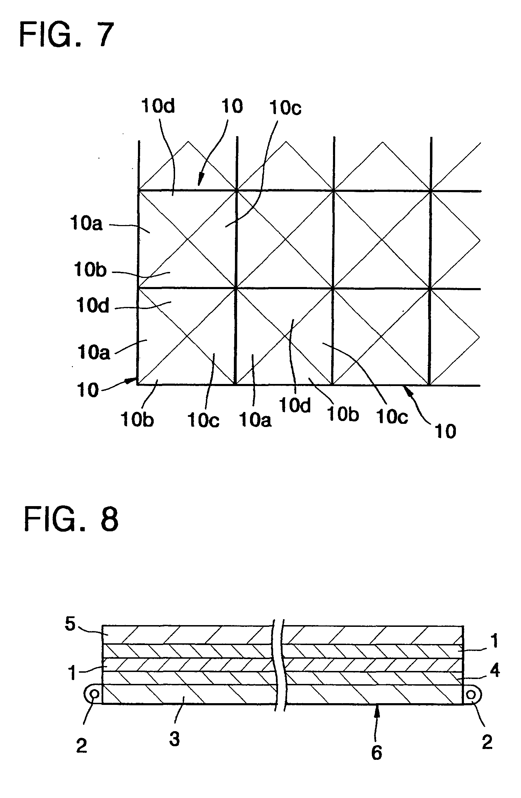

Fig. 8 is a cross-sectional view of a unit 6 of a liquid crystal display. A light guide plate 3 for extending light in plane is disposed between two backlights 2, 2. A diffusing film 4 is disposed on the light guide plate 3. The diffusing film 4 diffuses the light from the light guide plate 3 in all directions. Two light-collective films 1 are mounted on the diffusing film 4, and a liquid crystal panel 5 is further mounted thereon.

In the unit 6 of the liquid crystal display, the more light from the backlight 2 is incident in a normal direction of the liquid crystal panel 5, the clearer a brightness of the liquid crystal display is. That is, the brightness of the liquid crystal display is determined by a light intensity from the backlight 2. However, in order to increase a light amount from the back light 2, power consumption for a light source should be increased. This leads to enlargement in the size of a power source thereof. In this case, a manufacturing coat is increased, and at the same time, the size of the unit 6 of the liquid crystal display is also increased.

Therefore, although the light amount generated from the backlight 2 is fixed, the light-collective film 1 is used for condensing the light generated from the backlight 2 so that a large amount of light is incident in a normal direction of the liquid crystal panel 5, whereby most of the light, which is directed to other directions, is condensed at a front face of the light-collective film 1. Further, since a user typically sees the liquid crystal display in the front side thereof, if the amount of light to be diffused at both sides is reduced and the amount of light to be directed to the front side is increased, the user can see the liquid crystal display more clearly.

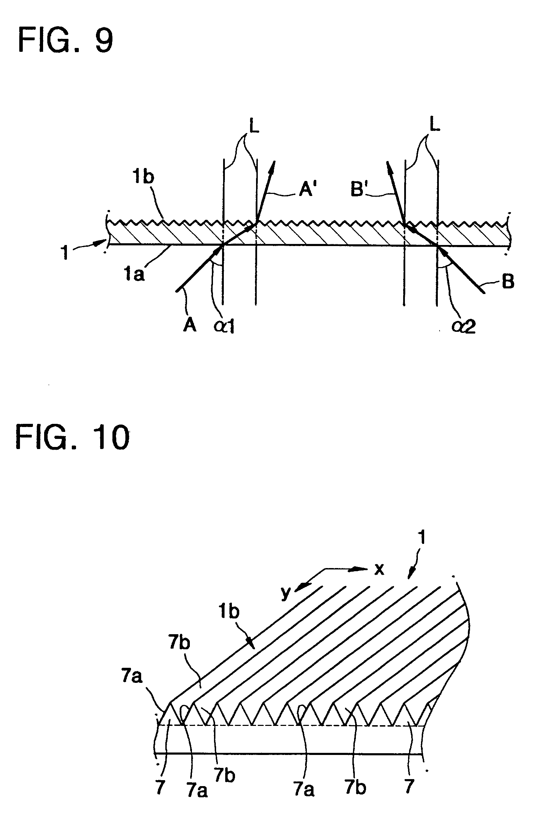

As shown in Figs. 9 and 10, the light-collective film 1 is comprised of a flat film base portion 1a and a prism portion 1b in which a plurality of triangular prisms 7 are continuously arranged side by side in a X direction on the film base portion 1a.

The light-collective film 1 serves to condense and output the light A, B incident onto the film base portion 1a. This function of the film base portion 1a will be briefly described. Here, the expression "light-collective" means that the light incident in various directions is arranged and output in a certain direction. For example, as shown in Fig. 9, the light A, B incident at an incident angle α1, α2 onto the light-collective film 1 is almost arranged in one direction, when emerging as emergent light A', B'. Particularly, in here, the "light-collective" means that the light, which is laterally incident at a large incident angle onto the light-collective film 1, emerges in a linear direction L.

The prism portion 1b of the light-collective film 1, as shown in Fig. 10, is formed with the plurality of triangular prisms arranged in series. To this end, an emergent surface, from which the light incident onto the flat film base portion 1a emerges, is a series of inclined faces comprised of the sides of the prism portion 1b of the light-collective film 1. Therefore, the emergent light from the sides of the prism portion 1b of the light-collective film 1 has a different direction from that of the incident light on the film base portion 1a. The direction of the emergent light is changed in accordance with a refractive surface, which is the side 7a, 7b of the prism portion 1a, as well as an incident angle of the light.

Meanwhile, since the triangular prism 7 of the light-collective film 1 is arranged in parallel with y-axis, the light parallel with the y-axis cannot be condensed. Therefore, the two light-collective films 1 are respectively stacked in the x and y-axial direction so that the triangular prisms 7 of each light-collective film 1 are orthogonal to each other.

In the conventional light-collective film 1, as described above, the light incident in the x and y-axial directions cannot be condensed with a single light-collective film 1. To this end, two light-collective films are employed. Therefore, a thickness of the light-collective film is increased and thus an entire thickness of the unit 6 of the liquid crystal display is increased.

### SUMMARY OF THE INVENTION

Accordingly, It is an object of the present invention to provide a light-collective film in which the light incident from various directions is condensed in a regular direction and simultaneously, with a single light-collective film.

In order to accomplish above objects, the present invention provides a light-collective film comprising a film base portion of a transparent resin and a regular triangular pyramid which is arranged in series on the film base portion and has a vertical angle of 102° ~ 116°.

Preferably, the regular triangular pyramid has a bottom side of 10µm ~ 50µm.

Further, the light-collective film is formed of the transparent resin having a refractive index of 1.52 ~ 1.62 and the vertical angle of the regular triangular pyramid is in an extent of 102° ~ 115°.

Further, the light-collective film is formed of the transparent resin having a refractive index of 1.45 ~ 1.52 and the vertical angle of the regular triangular pyramid is in an extent of 105° ~ 116°.

Polycarbonate, acryl, PET and so forth are used as the transparent resin.

### BRIEF DESCRIPTION OF THE DRAWINGS

Fig. 1 is a cross-sectional view of a light-collective film according to an embodiment of the present invention;
Fig. 2 is a partially enlarged view a prism portion of the light-collective film according to the embodiment of the present invention;
Fig. 3 is a plan view of the light-collective film according to the embodiment of the present invention;
Fig. 4 is a graph showing a result of simulation of the light-collective film of a polycarbonate material;
Fig. 5 is a graph showing a result of simulation of the light-collective film of an acrylic material;
Fig. 6 is a view showing a mechanism of a recurrent reflection;
Fig. 7 is a plan view of the prism portion using a quadrangular pyramid;
Fig. 8 is a cross-sectional view of a conventional unit of a liquid crystal display;
Fig. 9 is a cross-sectional view of a conventional light-collective film; and
Fig. 10 is a perspective view of the conventional light-collective film.

### DETAILED DESCRIPTION OF THE PREFERRED EMBODIMENTS

The objects, characteristics and advantages of the above-described invention will become more apparent by describing the preferred embodiments thereof with reference to the accompanying drawings.

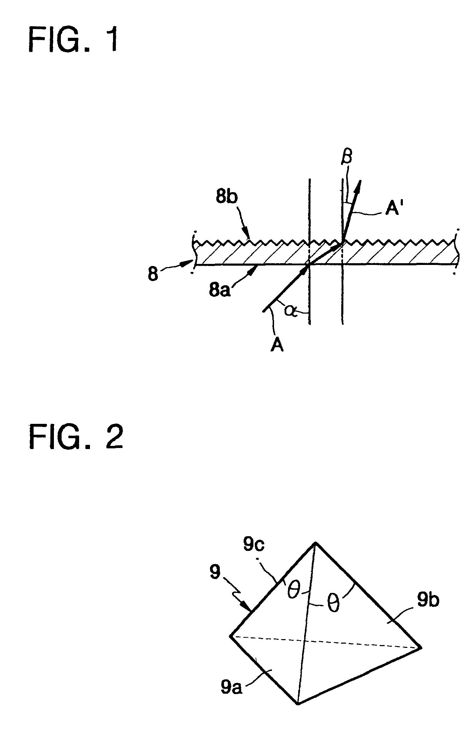

Figs. 1 to 3 show a light-collective film 8 according to an embodiment of the present invention.

The light-collective film 8 is made of a transparent material and includes a flat film base portion 8a and a prism portion 8b.

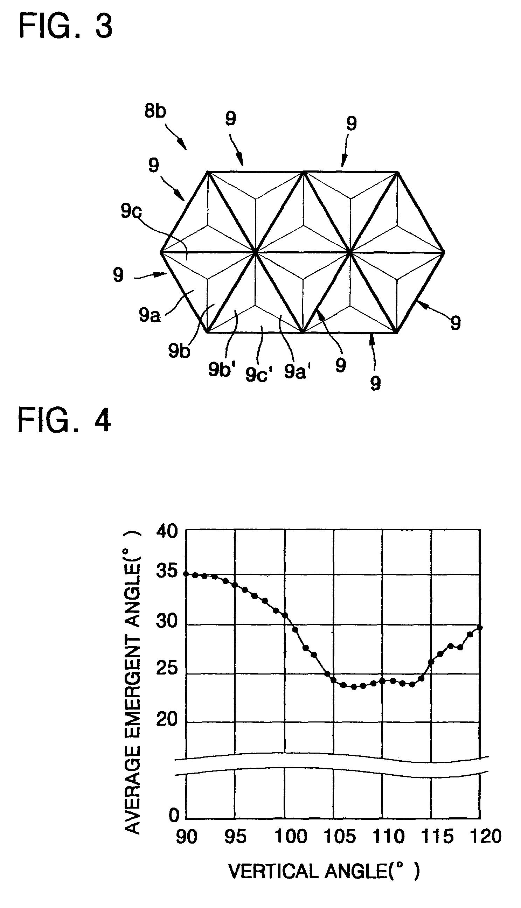

As shown in Figs. 2 and 3, the light-collective film 8 is provided with a plurality of regular triangular pyramids arranged in series. If the regular triangular pyramids are arranged in series, as shown in Fig. 2, the regular triangular pyramids 9 are line-symmetric with respect to a side contacted with an adjacent regular triangular pyramid 9. As the result, the prism portion 8b is formed by repeatedly arranging side surfaces 9a, 9b, 9c of one regular triangular pyramid 9 and sides surfaces 9a', 9b', 9c' of other regular triangular pyramid 9 rotated at 180°.

And, the light A incident at an incident angle α onto the film base portion 8a is refracted on the side surfaces 9a, 9b, 9c, 9a', 9b'. 9c' of the regular triangular pyramid 9 and emerges as an emergent light A' having an emergent angle β (referring to Fig. 1). At this time, the emergent angle β is based on a linear line L orthogonal to the film base portion 8a.

If it is possible that the emergent angle β can be reduced to be near to zero degree, a light-condensing rate can be more increased.

Therefore, in order to increase the light-condensing rate of the light-collective film 8, a vertical angle θ of the regular triangular pyramid 9 of the prism portion 9b was determined by a simulation.

In the light-collective film 8 in which the regular triangular pyramids 9 are arranged side by side, if the vertical angle θ is 90°, it is known that the light reflected to the three side surfaces of the regular triangular pyramid 9 is recurrent-reflected. The "recurrent reflection" means that a reflected light returns to a light source of an incident light.

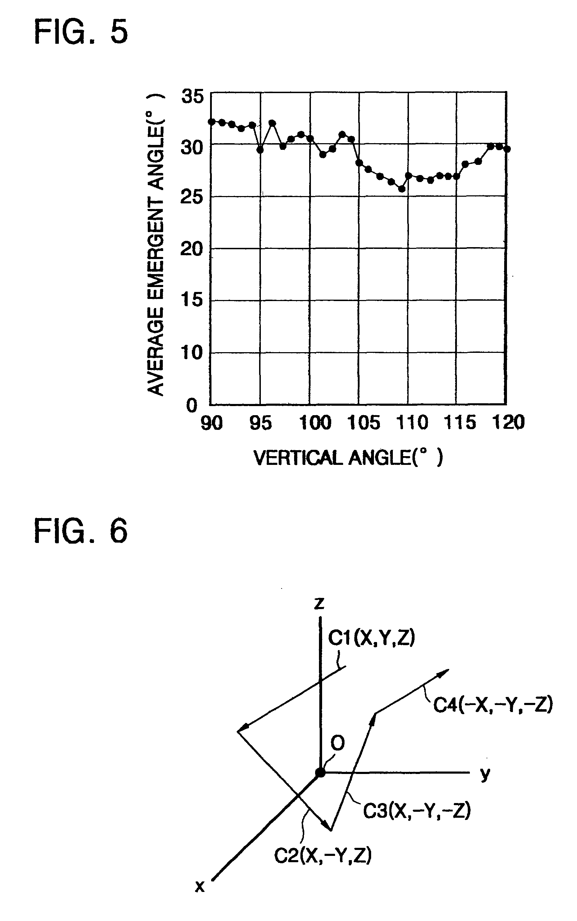

Referring to Fig. 6, the mechanism of the recurrent reflection will be briefly described below.

In Fig. 6, x, y and z-axes are corresponded to ridgelines of the regular triangular pyramid 9. Therefore, a zero point in Figure is an apex of the regular triangular pyramid 9, and xy, yz and zx-planes are corresponded to each side surface of the regular triangular pyramid 9.

Assuming that an incident light to be reflected on a first zx-plane is represented as a vector C1(X, Y, Z), a reflected light thereof is a vector C2(X, -Y, Z). If the C2(X, -Y, Z) is reflected on a second xy-plane, the next reflected light is a vector C3(X, -Y, -Z). Then, if the C3(X, -Y, -Z) is reflected on a third yz-plane, the next reflected light is vector C4(-X, -Y, -Z). That is, the reflected light C4 is the same as the incident light C4 which is vectorially reversed at 180°.

As described above, if the vertical angle of the regular triangular pyramid is 90°, the recurrent reflection is occurred. Therefore, it is supposed that the light amount emerging from each side surface of the regular triangular pyramid is reduced. Accordingly, the vertical angle θ was properly determined to other value except for the 90°,

A simulation estimated a direction where the light incident onto a light-collective film 9 of a polycarbonate material having a refractive index of 1.586 emerged. The simulation considered a case that the incident light from a bottom face of the regular triangular pyramid 9 was incident onto one of the three side surfaces (9a, 9b, 9c) and then reflected or emerged to the outside of the film, but not a case that the incident light within the light-collective film 8 was repeatedly reflected between the plurality of side surfaces. At this time, it was supposed that the incident light amount was constant regardless of the incident angle.

Fig. 4 is a graph showing a relationship between the vertical angle θ of the triangular pyramid 9 and an average emergent angle of the light emergent from the side surface.

As shown in Fig. 4, the light-collective film of the polycarbonate material has a small average emergent angle in the extent of the vertical angle θ of the triangular pyramid 9 of 102° ~ 115°. It shows that the emergent light amount toward a front face of the liquid crystal panel is increased when the light-collective film of the polycarbonate material is applied to the unit of the liquid crystal display. Therefore, the proper vertical angle θ for improving the light-condensing rate is in the extent of 102° ~ 115°.

Further, Fig. 5 shows a graph showing a result of simulation of the light-collective film of an acrylic material having a refractive index of 1.49.

In case of the light-collective film of an acrylic material, it is preferable that the vertical angle θ of the triangular pyramid 9 is in the extent of 105° ~ 116°, as shown in Fig. 5.

Preferably, the regular triangular pyramid 9 has a bottom side of 10µm ~ 50µm.

In case that the size of the bottom side of the regular triangular pyramid 9 is larger than 50µm, the light-collective film is thickened as well as the number of side surfaces as a refractive surface is reduced. In addition, if there is a defect in the regular triangular pyramid 9, the light-collective film is seriously affected with the defect.

Meanwhile, in case that the size of the bottom side of the regular triangular pyramid 9 is less than 10µm, it is supposed that the light-collective film is affected by an interference with a wavelength of the light. Therefore, it is not expected to obtain a desired light-condensing effect.

As described in the above embodiment, the light-collective film 8 having the plurality of the regular triangular pyramid 9 arranged side by side can condense the light from all directions with only a single sheet. Therefore, since the regular triangular pyramid 9 has a thinner thickness than the conventional regular triangular pyramid which needs two films, an entire thickness of the regular triangular pyramid 9 is reduced.

Moreover, if the vertical angle θ of the triangular pyramid 9 is properly selected, the light-condensing rate is also increased. Therefore, the brightness of the liquid crystal display is clearer without an increase in the light amount of the backlight 2 of the unit of the liquid crystal display.

In addition, since it does not need to increase the power source for the backlight, the manufacturing cost is reduced and thus the entire size of the liquid crystal display is minimized.

According to the present invention, a quadrangular pyramid may be applied to the light-collective film 8 instead of the regular triangular pyramid. However, a light-condensing rate by using the quadrangular pyramid is not compared with the above embodiment in this specification.

In case of the quadrangular pyramid, as shown in Fig. 7, there are provided four side surfaces (10a, 10b, 10c, 10d,) which are repeatedly arranged side by side. Therefore, the incident light is condensed by the four side surfaces of the quadrangular pyramid, which are respectively arranged at each different angle.

Meanwhile, in the above embodiment of Fig. 3, there are provided 6 side surfaces (9a, 9b, 9c, 9a', 9b', 9c') of the regular triangular pyramid, which are continuously arranged at each different angle. Therefore, the regular triangular pyramid 9 can condense the incident light at more various angles than the quadrangular pyramid.

Further, in the case of using the conventional two light-collective films 1 in which the triangular prisms 7 on each film are arranged to be orthogonal to each other and the quadrangular pyramid 10 in Fig. 7, since a line on the light-collective film is orthogonal to a line of the liquid crystal and the two lines are overlapped each other, there is a problem that moire may be occurred. However, in the light-collective film according to present invention, the line on the light-collective film is not orthogonal to a line of the liquid crystal and thus the two lines are not overlapped each other. Therefore, the moire is never occurred.

According to the present invention, the light incident from various directions can be condensed in one direction having a small emergent angle. Further, since a single sheet of the light-collective film is used, the thickness of the unit can be reduced.

And, if the light-collective film according to the present invention is used for the unit of the liquid crystal film, the size of the power source for the backlight can be also reduced. Therefore, the manufacturing cost and the entire size of the unit of the liquid crystal film can be reduced. Further, there is no anxious that the line of the light-collective film is overlapped with the line of the liquid crystal and thus the moire is occurred.

Although the preferred embodiment of the present invention have been disclosed for illustrative purposes, those skilled in the art will appreciate that various modifications, additions and substitutions are possible.

## Claims

1. A light-collective film (8), comprising:
a film base portion (8a) of a transparent resin; and
a regular triangular pyramid (8b) which is arranged in series on the film base portion (8a) and has a vertical angle of 102° ~ 116°.

2. The film of Claim 1, wherein the regular triangular pyramid (9) has a bottom side of 10µm ~ 50µm.

3. The film of Claim 1 or 2, wherein the light-collective film (8) is formed of the transparent resin having a refractive index of 1.52 ~ 1.62 and the vertical angle of the regular triangular pyramid (8b) is in an extent of 102° ~ 115°.

4. The film of Claim 1 or 2, wherein the light-collective film (8) is formed of the transparent resin having a refractive index of 1.45 ~ 1.52 and the vertical angle of the regular triangular pyramid (8b) is in an extent of 105° ~ 116°.
